# EUROPÄISCHE PATENTSCHRIFT

(11) **EP 1 525 646 B1**
(45) Veröffentlichungstag und Bekanntmachung des Hinweises auf die Patenterteilung: **23.12.2009**
(21) Anmeldenummer: 03755547.1
(22) Anmeldetag: 28.07.2003
(51) Int. Cl.: H01S 3/03, H01S 3/038

(54) **GASENTLADUNGSLASER**
GAS DISCHARGE LASER
LASER A DECHARGE GAZEUSE

(30) Priorität: 31.07.2002 RU 2002120302
(43) Veröffentlichungstag der Anmeldung: 27.04.2005
(73) Patentinhaber: Coherent GmbH, 37079 Göttingen (DE)
(72) Erfinder: BORISOV, Vladimir, Michailovich, 2-55 Troitsk Moscow reg. (RU); KHRISTOFOROV, Oleg, Borisovich, 45-1-117 Moscow (RU)
(74) Vertreter: von Hellfeld, Axel
(86) Internationale Anmeldenummer: PCT/EP2003/008328
(87) Internationale Veröffentlichungsnummer: WO 2004/013940

(56) Entgegenhaltungen:
- DD-A- 273 921
- DE-A- 4 113 241
- DE-A- 4 426 723
- US-A- 4 546 482
- US-A- 4 686 682
- US-A- 5 200 970
- PATENT ABSTRACTS OF JAPAN vol. 013, no. 453 (E-831), 11. Oktober 1989 (1989-10-11) -& JP 01 175274 A (HAMAMATSU PHOTONICS KK), 11. Juli 1989 (1989-07-11)
- PATENT ABSTRACTS OF JAPAN vol. 1995, no. 07, 31. August 1995 (1995-08-31) -& JP 07 111349 A (HAMAMATSU PHOTONICS KK), 25. April 1995 (1995-04-25)

## Beschreibung

Die Erfindung betrifft Gasentladungslaser, insbesondere Excimerlaser. Unter dem Begriff "Excimerlaser" versteht man heute auch im weitesten Sinne Exciplex-Laser; hier sollen darunter insbesondere auch F₂- oder HCI-Laser verstanden werden.

Gepulste Excimerlaser weisen in der Regel eine Einrichtung für die Vorionisation auf. Bekannt ist zum Beispiel die Funken-Vorionisation. Allerdings haben bekannte Excimerlaser mit einer solchen Vorionisierung den Nachteil, dass der Erhöhung der Strömungsgeschwindigkeit des zwischen den Hauptelektroden strömenden Lasergases relativ niedrige Grenzen gesetzt sind. Dies wiederum führt zu einer Begrenzung der Wiederholrate der Laserpulse. Auch sind bei den bekannten Lasersystemen dieser Art der Vergrößerung der Entladungsstrecke für die Gasentladung relativ enge Grenzen gesetzt, vgl. W.M. Borisow et al., Zeitschrift "Quantenelektronik", 22 No. 5, 446-450 (1995).

Excimerlaser mit Röntgen-Vorionisierung bekannter Bauart ermöglichen eine Verschiebung der vorstehend genannten Grenzen, vgl. Zeitschrift "Laser Focus World", 25, No. 10, 23, 1998. Bei einem bekannten Excimer-Lasersystem mit Röntgen-Vorionisierung ist die Hochspannungselektrode auf einem dielektrischen Flansch befestigt (vgl. Zeitschrift "Laser Focus World", 25, No. 10, 23, 1998). Damit ist es möglich, die Entladungsstrecke zu vergrößern und die mittlere Strahlungsleistung des Lasers zu erhöhen: Eine geringen Induktivität des Entladungskreises, die für einen hohen Wirkungsgrad des Lasers erforderlich ist, wird durch eine Verringerung der Stärke des genannten dielektrischen Flansches erreicht, wobei eine Reduzierung der mechanischen Belastung des Flansches dadurch erreicht wird, dass die am Flansch wirkende Druckdifferenz reduziert wird.

Dieses bekannte Lasersystem hat aber u.a. den Nachteil, dass es relativ große Abmessungen erfordert. Die Wartung ist relativ aufwendig. Auch ist der dielektrische Flansch relativ anfällig gegen Zerstörung, insbesondere beim Füllen der Laserröhre mit Hochdruckgas.

Das Patent der Russischen Föderation, Nr. 2064720, Kl. 6 H 07 S 3/03, Bulletin Nr. 21, beschreibt einen Excimerlaser mit einem langgezogenen Laserkörper (üblicherweise Laserrohr oder Laserröhre genannt), in dem die Einrichtungen für die Erzeugung des Gasstromes, die Vorionisierungseinrichtung, eine langgestreckte Erdelektrode (also eine an Masse liegende Elektrode) und eine Hochspannungselektrode angeordnet sind. Ein Keramikflansch dient zur Abstützung der Bauteile und auf der Außenseite des Keramikflansches sind Kondensatoren angeordnet, die mit geringer Induktivität an die Hauptelektroden des Lasers angeschlossen sind. Im Laser wird ein Gasstrom mit sehr hoher Geschwindigkeit und Homogenität zwischen den Elektroden erzeugt; sodass der Laser mit sehr hoher Wiederholrate (Laserimpulsfolge) betrieben werden kann. Der Laser hat einen sehr kompakten Aufbau und eine hohe Laserleistung bei hoher Wiederholrate.

Allerdings ist bei diesem Stand der Technik die Herstellung der Laserröhre und des genannten Keramikflansches relativ aufwendig und teuer. Ein weiterer Nachteil dieser bekannten Bauart von Excimerlasern liegt darin, dass der Steigerung der Laserleistung durch Vergrößerung der Abmessungen der Laserröhre Grenzen gesetzt sind und auch der Gasdruck gering gehalten werden muss, um die Gefahr einer Zerstörung des Keramikflansches zu vermeiden. Bei den gegebenen Abmessungen kann es zu Kräften am Flansch von bis zum 15 Tonnen kommen, wenn das Lasergas einen Druck von 5 bar hat. Soll zur Verbesserung der Stabilität und Sicherheit die Stärke des Keramikflansches erhöht werden, erhöht sich damit auch die Induktivität der Entladungsschaltung und es wird der Wirkungsgrad des Lasers verringert. Auch hat dieser bekannte Laser den Nachteil, dass seine Vorionisierungseinrichtung zwei Reihen diskreter Funkenstrecken seitlich der Hauptelektroden aufweist, was zu einer Inhomogenität in der Gasentladung führt und den Wirkungsgrad des Lasers vermindert. Auch sind bei diesem bekannten Laser die Möglichkeiten begrenzt, durch Erhöhung des Querschnitts der Gasentladung eine Leistungssteigerung zu erreichen. Die Veröffentlichung Patent Abstracts of Japan, vol. 013, no. 453 (E-831) zeigt einen Excimerlaser, bei dem Metallelektroden für die Vorionisierung vor und hinter einer Hauptelektrode angeordnet sind. Ein hindernisfreier Strömungsweg für das Lasergas ist dort nicht gegeben.

Der vorliegenden Erfindung liegt deshalb die Aufgabe zugrunde, einen Gasentladungslaser, insbesondere Excimerlaser, bereitzustellen, der bei kompaktem und wartungsfreundlichem Aufbau hohe Laserleistungen bei hohen Impulsfolgefrequenzen ermöglicht. Der Laser soll einfach und kostengünstig herstellbar sein und eine hohe Betriebszuverlässigkeit aufweisen.

Hierzu stellt die Erfindung einen Gasentladungskörper bereit mit in einer Laserröhre angeordneten Hauptelektroden, zwischen denen die Gasentladung erfolgt, wobei die Laserröhre zumindest teilweise aus einem Keramikwerkstoff besteht, wobei Gas-Führungskörper aus Keramik am Strömungsweg des Gases vor und/oder hinter einer der Hauptelektroden angeordnet sind und mit der Hauptelektrode eine im wesentlichen durchgehende, hindernisfreie Fläche bilden.

Bevorzugt ist die Laserröhre über ihre gesamte Längserstreckung kreiszylinderförmig und besteht insgesamt aus einem dielektrischen Material, bevorzugt einem Keramikwerkstoff. Flansche, welche die Laserröhre an den Stirnseiten abschließen können aus einem Metall bestehen.

Gemäß einer bevorzugten Ausgestaltung der Erfindung ist vorgesehen, dass eine der Hauptelektroden, insbesondere die Hochspannungselektrode, nahe oder direkt an der Innenfläche des Keramikrohrs angeordnet ist und dass Gas-Führungskörper am Strömungsweg des Gases vor und/oder hinter der genannten Hauptelektrode angeordnet sind.

Die genannten Gas-Führungskörper bestehen bevorzugt im Wesentlichen aus einem Keramikwerkstoff.

Die Gas-Führungskörper sind gemäß einer weiteren bevorzugten Ausgestaltung so in Bezug auf die Hauptelektrode, neben der sie montiert sind, bündig angeordnet, dass ihre Oberfläche zusammen mit der Oberfläche der Hauptelektrode eine Fläche bilden, die den Teil eines Kreiszylinders bildet, wobei der Krümmungsradius diese Kreiszylinders größer ist als der Krümmungsradius der Laserröhre.

Mit diesen Maßnahmen wird eine optimale Führung des Lasergases zwischen den Hauptelektroden erreicht und auch eine hohe Strömungsgeschwindigkeit für das Lasergas ermöglicht.

Gemäß einer anderen bevorzugten Weiterbildung der Erfindung ist das die Laserröhre (laser tube) bildende Keramikrohr außenseitig durch einen Mantel abgestützt, der radiale Druckkräfte auffangen kann. Statt eines Mantels können auch entsprechende Ringe um das Keramikrohr gelegt sein. Der Mantel bzw. die Ringe bestehen aus dielektrischem Material. Eine bevorzugte Ausgestaltung sieht als Material für den Mantel bzw. die Ringe ein Glasfaserprodukt vor.

Gemäß einer anderen bevorzugten Ausgestaltung der Erfindung ist eine Vorionisierungseinrichtung vorgesehen mit einer sogenannten Gleitentladung auf der Oberfläche einer dielektrischen Platte.

Eine andere bevorzugte Weiterbildung der Erfindung sieht vor, dass zumindest eine der Hauptelektroden Durchlässe für ionisierende Strahlung, also insbesondere UV-Strahlung, aufweist. Diese Durchlässe sind bevorzugt schlitzförmig, wobei die Längsachsen der Schlitze senkrecht zur Längsachse der Hauptelektroden stehen.

Die genannte Gleitentladung wird bevorzugt so positioniert, dass sie insgesamt symmetrisch ist in Bezug auf eine Ebene, in der die Längsachsen der Hauptelektroden des Lasers liegen.

Eine weitere bevorzugte Variante der Erfindung sieht vor, dass zumindest eine der Hauptelektroden gasdurchlässig ist, sodass eine Gasströmung durch die Hauptelektrode geführt werden kann, um den Durchsatz des Lasergases zwischen den Hauptelektroden zu fördern. Bevorzugt sind für diesen Gasdurchlass die oben genannten Schlitze vorgesehen, durch die auch die UV-Strahlung für die Vorionisierung in den Raum zwischen den Hauptelektroden eintritt.

Eine weitere bevorzugte Variante der Erfindung sieht vor, dass die Laserröhre, gegebenenfalls mit einem Mantel oder Ringen, in einem Gehäuse angeordnet ist mit Freiraum zwischen dem Gehäuse und der Laserröhre, der mit einem Gas unter Druck gefüllt ist. Damit wird die Druckdifferenz, die am Keramikmaterial des Laserrohres wirkt, reduziert. Es wird also im Freiraum ein Druck gewählt, der nahe dem Gasdruck im Laserrohr liegt oder einen Wert hat, der zwischen dem Gasdruck im Laserrohr und dem Druck der äußeren Atmosphäre liegt.

Nachfolgend werden Ausführungsbeispiele der Erfindung anhand der Zeichnungen näher beschrieben. Es zeigt:
- Figur 1: schematisch einen Schnitt in Höhe der Hauptelektroden durch ein erstes Ausführungsbeispiel eines Excimerlasers;
- Figur 2: einen Schnitt ähnlich wie Figur 1 durch ein zweites Ausführungsbeispiel eines Excimerlasers;
- Figur 3: einen Schnitt, ähnlich wie die Figuren 1 und 2, durch ein drittes Ausführungsbeispiel eines Excimerlasers, und
- Figur 4: einen Schnitt, ähnlich wie die Figuren 1 bis 3, durch ein viertes Ausführungsbeispiel eines Excimerlasers.

In der Figuren sind einander entsprechende oder funktionsähnliche Bauteile mit den gleichen Bezugszeichen versehen, so dass sich eine wiederholte Beschreibung erübrigt.

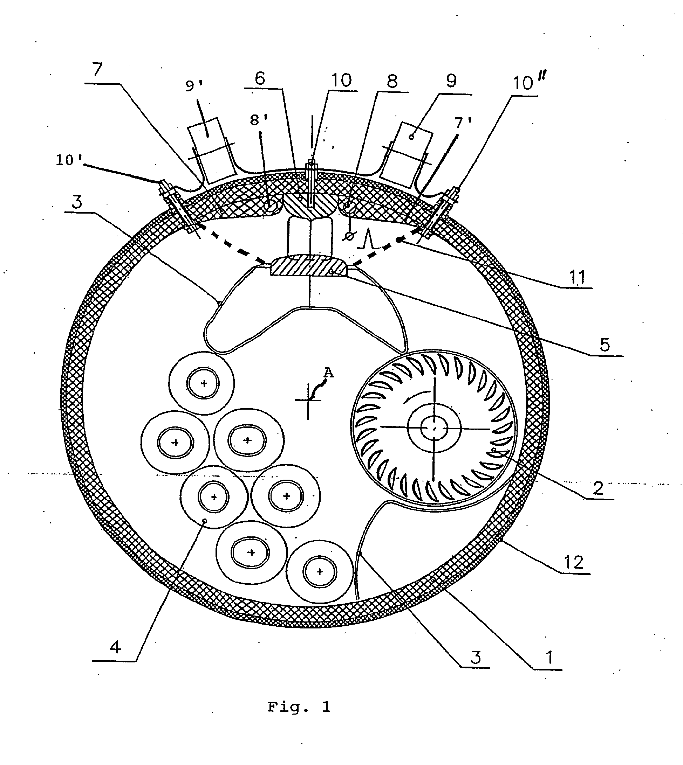

Gemäß Figur 1 ist eine Laserröhre 1 kreiszylinderförmig. Die Längsachse A der Laserröhre (laser tube) steht somit senkrecht zur Zeichnungsebene.

In der Laserröhre 1 ist ein Ventilator 2 angeordnet, um das Lasergas in an sich bekannter Weise in Umlauf zu versetzen. In den Figuren verläuft die allgemeine Gasströmung etwa im Uhrzeigersinn. Ein Strömungsformer 3 bewirkt, dass die vom Ventilator 2 kommende Gasströmung über einen Wärmetauscher 4 abgekühlt wird. Danach gelangt das zirkulierende Lasergas zwischen Hauptelektroden 5, 6 der Laserröhre.

Die Hochspannungselektrode 6 für die Haupt-Gasentladung ist direkt an der Innenwand der Laserröhre 1 angeordnet. Die Laserröhre 1 besteht aus Keramik. Die zweite Hauptelektrode 5 für die Gasentladung liegt an Masse (Erde). Sie ist radial einwärts in Bezug auf die HV-Hauptelektrode 6 angeordnet.

Die Versorgungsschaltung für die Gasentladung enthält Kondensatoren 9, 9', die direkt auf der Außenseite der Laserröhre 1 (gegebenenfalls mit einem weiter unten beschriebenen Mantel, der dazwischen liegt) angeordnet sind. Durchführungen 10, 10', 10", führen in der dargestellten Weise zu den Hauptelektroden. Mit dieser kompakten Bauweise gemäß den Figuren wird eine extrem geringe Induktivität der die Kondensatoren 9, 9'enthaltenen Gasentladungsschaltung erreicht. Die Stromleitungen 11 bilden kein wesentliches Hindernis für die Gasströmung.

In Strömungsrichtung vor und hinter der Hauptelektrode 6 liegen Führungskörper 7, 7', ebenfalls aus Keramik, um die Gasströmung in Bezug auf den Raum zwischen den Hauptelektroden 5, 6 zu formen.

Die Führungskörper 7, 7' bilden mit ihren Oberflächen und der Oberfläche der Hauptelektrode 6, die der anderen Hauptelektrode 5 zugekehrt ist, quasi eine bündige Anordnung derart, dass die Oberflächen der Führungskörper 7, 7' und der Hauptelektrode 6 eine im Wesentlichen durchgehende Fläche bilden, ohne Hindernisse für die Gasströmung. Diese Fläche bildet den Teil eines Kreiszylinders, dessen Durchmesser wesentlich größer ist als der Durchmesser der Laserröhre 1.

Beim Ausführungsbeispiel gemäß Figur 1 sind Vorionisierungselektroden 8, 8' in die Keramik-Führungskörper 7 bzw. 7' eingebettet, um in an sich bekannter Weise für die Vorionisierung eine Coronaentladung durchzuführen.

Auf der Außenfläche der Laserröhre 1 aus Keramik ist ein Mantel 12 angeordnet, um die Laserröhre 1 in Bezug auf radiale Kräfte abzustützen, die durch den hohen Druck des Lasergases in der Laserröhre 1 erzeugt werden. Der Mantel 12 besteht zum Beispiel aus einem Glasfaserkunststoff.

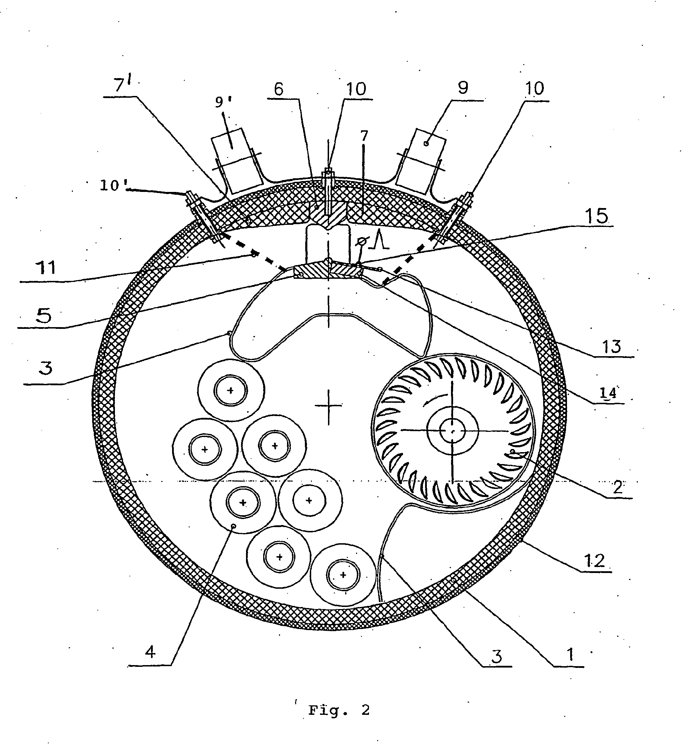

Figur 2 zeigt eine abgewandelte Ausführungsform, bei der die HV-Hauptelektrode 6, wie dargestellt, leicht konisch ist mit abgerundeter Spitze, im Unterschied zu der runden Form der Hauptelektrode 6 gemäß Figur 1.

Bei dem Ausführungsbeispiel nach Figur 2 ist die Vorionisierungseinrichtung gegenüber Figur 1 abgewandelt. Eine flache dielektrische Platte 13 liegt direkt auf der Hauptelektrode 5. Eine Initialisierungselektrode 14 ist in die Hauptelektrode eingebettet und eine Zündelektrode 15 ist so in Bezug auf die Platte 13 angeordnet, dass beim Zünden der Vorionisierung eine Gleitentladung auf der Platte 13 erfolgt. Die Platte 13 deckt die Hauptelektrode nur zu einem geringen Teil ab. Aufgrund der Gleitentladung entsteht auf der dielektrischen Platte 13 eine flache. Schicht aus Entladungsplasma, welches ionisierende Strahlung emittiert. Die Stärke der Vorionisierung wird über eine Steuerung der Energie der Gleitentladung optimiert, um den Wirkungsgrad des Lasers zu steigern.

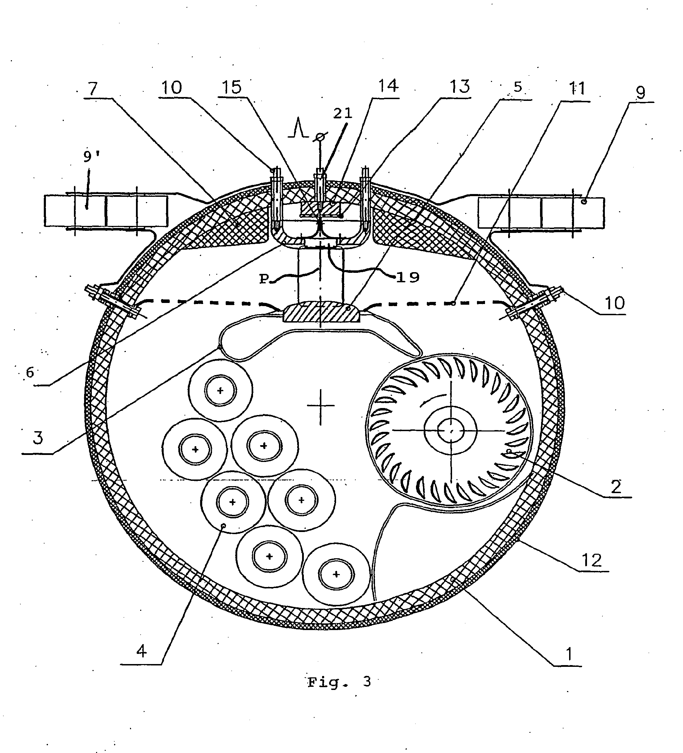

Figur 3 zeigt ein weiteres abgewandeltes Ausführungsbeispiel einer Laserröhre, bei dem die Vorionisierungseinrichtung ähnlich der Figur 2, jedoch an anderer Stelle angeordnet ist. Die ebene Platte 13 für die Gleitentladung befindet sich hier, von der Gasentladung aus gesehen, hinter der Hauptelektrode 6, an der die Hochspannung (HV) für die Hauptentladung anliegt. Eine Initiationselektrode 14 ist zwischen der Hauptelektrode 6 und der Wand der Laserröhre 1 mit einer gesonderten Durchführung 21 angeordnet. In der Hauptelektrode 6 sind eine Vielzahl von Schlitzen 19 ausgeformt, durch die ionisierende Strahlung in den Raum zwischen den Hauptelektroden 5, 6 durchtreten kann. Des Weiteren enthält die Vorionisierungseinrichtung gegenüber der dielektrischen Platte 13 eine Zündelektrode 15. Bei den Ausführungsbeispielen muss sich die Vorionisierungseinrichtung in Richtung senkrecht zur Zeichnungsebene nicht über die gesamte Länge der Hauptelektroden erstrecken, sondern kann aus jeweils intermittierend angeordneten Abschnitten bestehen.

Die Schlitze 19 in der Hauptelektrode 6 erstrecken sich senkrecht zur Ebene P, die die beiden Längsachsen der Hauptelektroden enthält (vgl. Figur 3).

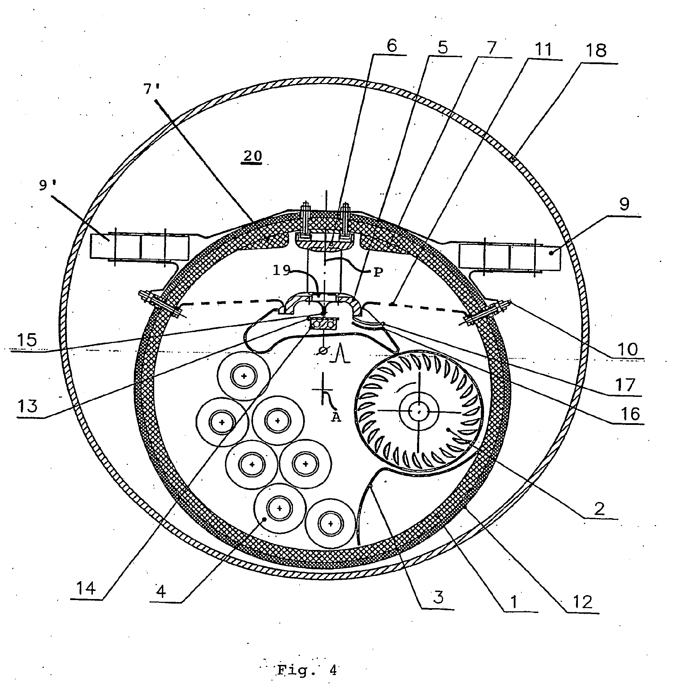

Beim Ausführungsbeispiel gemäß Figur 4 ist die Vorionisierungseinrichtung hinter der an Masse liegenden Hauptelektrode 5 angeordnet (in Bezug auf die Gasentladung zwischen den Hauptelektroden 5, 6). Analog dem Ausführungsbeispiel nach Figur 3 sind hinter der Hauptelektrode 5 eine Initialisierungselektrode 14, eine dielektrische flache Platte 13 und eine Zündelektrode 15 angeordnet. Durch Schlitze 19, die dem oben beschriebenen Schlitz 19 gemäß Figur 3 entsprechen, tritt ionisierende Strahlung in den Raum zwischen den Hauptelektroden 5, 6.

Das Ausführungsbeispiel gemäß Figur 4 zeigt noch eine Besonderheit hinsichtlich der Gasströmung. Strömungsflächen 16, 17 führen aus dem Strömungsformer 3 heraus direkt zum Ventilator 2. Am Ausgang zwischen den Strömungsflächen 17, 16 (in Figur 4 also rechts) entsteht somit ein Saugeffekt aufgrund der Wirkung des Ventilators 2. Dies bedeutet, dass durch die Schlitze 19 in der Hauptelektrode 5 Gas hindurchtritt. Dies fördert die Gasströmung durch den Entladungsraum zwischen den Hauptelektroden und verhindert insbesondere ein Abreißen des Gasstromes an der Hauptelektrode.

Insgesamt ermöglichen die in den Figuren gezeigten Ausgestaltungen des Lasers eine sehr kompakte Bauweise der Laserröhre bei gleichzeitig relativ großem Entladevolumen.

Das Ausführungsbeispiel gemäß Figur 4 zeigt noch eine Weiterentwicklung mit einem äußeren Gehäuse 18, in dem die Laserröhre 1 so angeordnet ist, dass ein Freiraum 20 zwischen der Laserröhre 1 und dem Gehäuse 18 entsteht. In den Freiraum 20 wird ein Druckgas eingegeben, das gute elektrische Isolationseigenschaften hat, d.h. elektrischen Entladungen jeglicher Art entgegensteht. Dies kann zum Beispiel trockene Luft sein. Das Gas in dem Freiraum 20 hat einen Druck, der so gewählt ist, dass die Laserröhre 1 weitestgehend von mechanischen Belastungen befreit ist. Gemäß Figur 4 ist das äußere Gehäuse auch kreiszylinderförmig. Mit den in den Figuren gezeigten kreiszylinderförmigen Gestaltungen sowohl der Laserröhre 1 also auch des Gehäuses 18, können die (nicht gezeigten) Stirnflächen der Zylinder in einfacher Weise mit geeigneten Flanschen abgeschlossen werden.

Die gezeigten Strukturen für die Laserröhre und die Anordnung der Kondensatoren 9, 9' ermöglicht eine extrem kompakte Gestaltung der gesamten Anordnung mit großem Entladungsvolumen bei gleichzeitig langer Lebensdauer des Lasergases. Der Laser hat einen relativ großen Wirkungsgrad, ermöglicht eine einfache und damit kostengünstige Herstellung, und ist wartungsfreundlich.

## Patentansprüche

1. Gasentladungslaser, insbesondere Excimerlaser, mit in einer Laserröhre (1) angeordneten Hauptelektroden (5, 6), zwischen denen die Gasentladung erfolgt, wobei die Laserröhre (1) zumindest teilweise aus einem Keramikwerkstoff besteht, **dadurch gekennzeichnet, dass** Gas-Führungskörper (7, 7') aus Keramik am Strömungsweg des Gases vor und/oder hinter einer der Hauptelektroden (6) angeordnet sind und mit der Hauptelektrode (6) eine im wesentlichen durchgehende, hindernisfreie Fläche bilden.

2. Gasentladungslaser nach Anspruch 1, **dadurch gekennzeichnet, dass** eine der Hauptelektroden (5, 6), insbesondere die Hochspannungselektrode (6), nahe oder direkt an der Innenfläche der Keramikrohrs (1) angeordnet ist und dass die Gas-Führungskörper (7, 7') am Strömungsweg des Gases vor und/oder hinter der genannten Hauptelektrode (6) angeordnet sind.

3. Gasentladungslaser nach einem der Ansprüche 1 und 2, **dadurch gekennzeichnet, dass** der oder die Gas-Führungskörper (7, 7') bündig in Bezug auf die genannte Hauptelektrode (6) angeordnet sind.

4. Gasentladungslaser nach einem der Ansprüche 1 bis 3, **dadurch gekennzeichnet, dass** der oder die Gas-Führungskörper (7, 7') mit einer Seitenkante an die genannte Hauptelektrode (6) anstoßen oder benachbart dazu angeordnet sind.

5. Gasentladungslaser nach einem der Ansprüche 1 bis 4 **dadurch gekennzeichnet, dass** die Oberflächen der Gas-Führungskörper (7, 7') und der genannten Hauptelektrode (6) eine in der Kontur etwa zylindrische Fläche bilden, deren Krümmungsradius größer ist als der der Laserröhre (1) und die parallel verläuft zu der Längsachse (A) der Laserröhre (1).

6. Gasentladungslaser nach einem der vorhergehenden Ansprüche, **dadurch gekennzeichnet, dass** die im Wesentlichen aus Keramik bestehende Laserröhre (1) außenseitig durch einen Mantel (12), insbesondere aus dielektrischem Material, oder Ringe abgestützt ist.

7. Gasentladungslaser nach Anspruch 6, **dadurch gekennzeichnet, dass** der Mantel (12) oder die Ringe aus Glasfasermaterial bestehen.

8. Gasentladungslaser nach einem der vorhergehenden Ansprüche, **dadurch gekennzeichnet, dass** eine Vorionisierungseinrichtung vorgesehen ist mit einer Gleitentladung auf der Oberfläche einer dielektrischen Platte (13).

9. Gasentladungslaser nach einem der vorhergehenden Ansprüche, **dadurch gekennzeichnet, dass** zumindest eine der Hauptelektroden (5, 6) Durchlässe (19) für ionisierende Strahlung aufweist.

10. Gasentladungslaser nach Anspruch 9, **dadurch gekennzeichnet, dass** die Durchlässe (19) schlitzförmig sind mit Schlitz-Längsachsen, die senkrecht stehen zu den Längsachsen der Hauptelektroden (5, 6).

11. Gasentladungslaser nach einem der Ansprüche 8 bis 10, **dadurch gekennzeichnet, dass** die Gleitentladung für die Vorionisierung symmetrisch ist in Bezug auf eine Ebene (P), die die Längsachsen der Hauptelektroden (5, 6) enthält.

12. Gasentladungslaser nach einem der vorhergehenden Ansprüche, **dadurch gekennzeichnet, dass** zumindest eine der Hauptelektroden (5, 6) gasdurchlässig ist und Gasströmung durch diese Hauptelektrode (5) geführt ist.

13. Gasentladungslaser nach einem der vorhergehenden Ansprüche, **dadurch gekennzeichnet, dass** die Laserröhre (1), gegebenenfalls mit einem Mantel (12) oder Ringen, in einem Gehäuse (18) angeordnet ist mit Freiraum (20) zwischen dem Gehäuse (18) und der Laserröhre (10), der mit einem Gas unter Druck gefüllt ist.

## Claims

1. A gas discharge laser, in particular an excimer laser, with main electrodes (5, 6) between which the gas discharge takes place, which are arranged in a laser tube (1), with the laser tube (1) consisting at least partially of a ceramic material,
**characterised in that** ceramic gas guide bodies (7, 7') are arranged at the flow path of the gas upstream and/or downstream of one of the main electrodes (6) and form an essentially continuous obstacle-free area with the main electrode (6).

2. The gas discharge laser according to Claim 1,
**characterised in that** one of the main electrodes (5, 6), in particular the high voltage electrode (6), is arranged near the or directly at the inner surface of the ceramic tube (1), and that the gas guide bodies (7, 7') are arranged at the flow path of the gas upstream and/or downstream of said main electrode (6).

3. The gas discharge laser according to one of Claims 1 and 2,
**characterised in that**
the gas guide body or bodies (7, 7') are arranged flush with reference to said main electrode (6).

4. The gas discharge laser according to one of Claims 1 to 3,
**characterised in that**
the gas guide body or bodies (7, 7') abut said main electrode (6) with one side edge or is/are arranged in a neighbouring relationship to it.

5. The gas discharge laser according to one of Claims 1 to 4,
**characterised in that** the surfaces of the gas guide bodies (7, 7') and of said main electrode (6) form an approximately cylindrical surface contour whose radius of curvature is greater than that of the laser tube (1) and which extends parallel to the longitudinal axis (A) of the laser tube (1).

6. The gas discharge laser according to one of the previous Claims,
**characterised in that**
the laser tube (1) which essentially consists of a ceramic material, is supported at the outside by a shell (12), in particular of a dielectric material, or by rings.

7. The gas discharge laser according to Claim 6,
**characterised in that**
the shell (12) or the rings consist of a glass fibre material.

8. The gas discharge laser according to one of the previous Claims,
**characterised in that**
a pre-ionisation device is provided with a sliding discharge on the surface of a dielectric plate (13).

9. The gas discharge laser according to one of the previous Claims,
**characterised in that** at least one of the main electrodes (5, 6) comprises openings (19) for an ionising radiation.

10. The gas discharge laser according to Claim 9,
**characterised in that**
the openings (19) are slit-shaped with longitudinal slit axes which extend orthogonally to the longitudinal axes of the main electrodes (5, 6).

11. The gas discharge laser according to one of Claims 8 to 10,
**characterised in that**
the sliding discharge for the pre-ionisation is symmetrical relative to a plane (P) which includes the longitudinal axes of the main electrodes (5, 6).

12. The gas discharge laser according to one of the previous Claims,
**characterised in that**
at least one of the main electrodes (5, 6) is gas permeable and that the gas flow is guided through this main electrode (5).

13. The gas discharge laser according to one of the previous Claims,
**characterised in that**
the laser tube (1), if necessary with a shell (12) or rings, is arranged in a housing (18), with a clearance between the housing (18) and the laser tube (1), which is filled with a pressurised gas.

## Revendications

1. Laser à décharge gazeuse, en particulier un laser à excimère, comprenant des électrodes principales (5, 6) disposées dans un tube laser (1) entre lesquelles se produit la décharge gazeuse, ledit tube laser (1) se compose au moins pour partie d'un matériau céramique, **caractérisé en ce que** des corps de guidage de gaz (7, 7') en céramique sont disposés en amont et/ou en aval d'une des électrodes principales (6) sur la trajectoire d'écoulement du gaz et forment avec l'électrode principale (6) une surface pour l'essentiel continue et sans obstacle.

2. Laser à décharge gazeuse selon la revendication 1, **caractérisé en ce qu'**une des électrodes principales (5, 6), en particulier l'électrode à haute tension (6), est disposée à proximité de ou directement sur la surface intérieure du tube en céramique et que les corps de guidage de gaz (7, 7') sont disposés en amont et/ou en aval de ladite électrode principale (6) sur la trajectoire d'écoulement du gaz.

3. Laser à décharge gazeuse selon l'une des revendications 1 et 2, **caractérisé en ce que** le ou les corps de guidage de gaz (7, 7') sont disposés en affleurement avec ladite électrode principale (6).

4. Laser à décharge gazeuse selon l'une des revendications 1 à 3, **caractérisé en ce que** le ou les corps de guidage de gaz (7, 7') présentent un chant latéral adjacent à ladite électrode principale (6) ou sont disposés dans le voisinage de cette dernière.

5. Laser à décharge gazeuse selon l'une des revendications 1 à 4, **caractérisé en ce que** les surfaces des corps de guidage de gaz (7, 7') et de ladite électrode principale (6) forment une surface de contour quasiment cylindrique, dont le rayon de courbe est plus grand que celui du tube laser (1) et laquelle s'étend parallèlement à l'axe longitudinal (A) du tube laser (1).

6. Laser à décharge gazeuse selon l'une des revendications précédentes, **caractérisé en ce que** les tubes laser (1) composés pour l'essentiel en céramique sont, à l'extérieur, soutenus par un manteau (12), en particulier un manteau composé d'un matériau diélectrique, ou par des anneaux.

7. Laser à décharge gazeuse selon la revendication 6, **caractérisé en ce que** le manteau (12) ou les anneaux se composent d'un matériau contenant des fibres de verre.

8. Laser à décharge gazeuse selon l'une des revendications précédentes, **caractérisé en ce qu'**il est prévu un dispositif de pré-ionisation au moyen d'une décharge glissante sur la surface d'une plaque diélectrique (13).

9. Laser à décharge gazeuse selon l'une des revendications précédentes, **caractérisé en ce qu'**au moins une des électrodes principales (5, 6) présente des passages (19) pour le rayonnement ionisant.

10. Laser à décharge gazeuse selon la revendication 9, **caractérisé en ce que** les passages (19) se présentent sous forme de fentes avec des axes longitudinaux de fente placés perpendiculairement par rapport aux axes longitudinaux des électrodes principales (5, 6).

11. Laser à décharge gazeuse selon l'une des revendications 8 à 10, **caractérisé en ce que** la décharge glissante en vue de la pré-ionisation est symétrique par rapport à un plan (P) qui comprend les axes longitudinaux des électrodes principales (5, 6).

12. Laser à décharge gazeuse selon l'une des revendications précédentes, **caractérisé en ce qu'**au moins une des électrodes principales (5, 6) est perméable aux gaz et que le courant gazeux est guidé à travers cette électrode principale (5).

13. Laser à décharge gazeuse selon l'une des revendications précédentes, **caractérisé en ce que** le tube laser (1), muni éventuellement d'un manteau (12) ou d'anneaux, est disposé dans un boîtier (18), avec un espace libre (20) entre le boîtier (18) et le tube laser (10) qui est rempli d'un gaz sous pression.
